# FASCICULE DE BREVET EUROPEEN

(11) **EP 0 767 745 B1**
(45) Date de publication et mention de la délivrance du brevet: **21.07.1999**
(21) Numéro de dépôt: 95942230.4
(22) Date de dépôt: 07.12.1995
(51) Int. Cl.: B60N 3/14, B60Q 3/02

(54) **BAGUE ECLAIRANTE POUR ALLUME-CIGARES, EN PARTICULIER POUR VEHICULE AUTOMOBILE**
LEUCHTRING FÜR ZIGARETTENANZÜNDER, INSBESONDERE FÜR KRAFTFAHRZEUGE
LIGHTING RING FOR A CIGARETTE LIGHTER, PARTICULARLY IN A MOTOR VEHICLE

(30) Priorité: 08.12.1994 FR 9414897
(43) Date de publication de la demande: 16.04.1997
(73) Titulaire: VALEO VISION, 93000 Bobigny (FR)
(72) Inventeur: MATHIEU, Daniel, F-81200 Mazamet (FR)
(74) Mandataire: Gamonal, Didier
(86) Numéro de dépôt international: FR9501629
(87) Numéro de publication internationale: WO9617749

(56) Documents cités:
- EP-A- 0 448 501
- EP-A- 0 547 929
- FR-A- 2 169 587
- FR-A- 2 320 211
- FR-A- 2 595 132

## Description

La présente invention concerne les allume-cigares, notamment pour véhicule automobile, et se rapporte plus particulièrement à la bague éclairante que comporte un tel allume-cigares décrit par exemple dans le document FR-A-2 630 057.

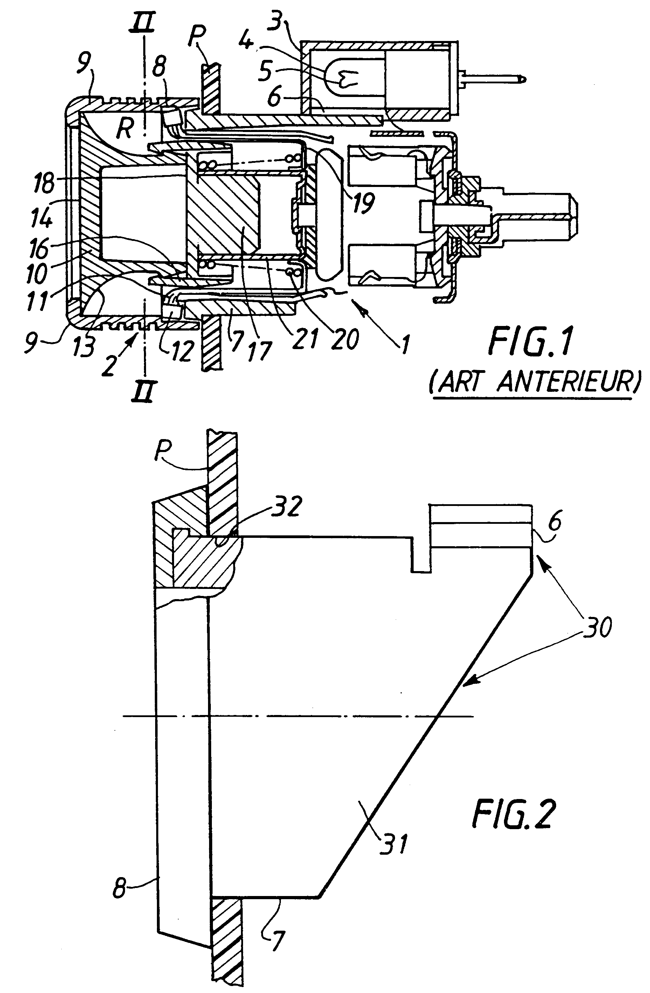

Un tel allume-cigares (figure 1) comporte un corps d'allumage 1, servant de réceptacle à un bouchon chauffant 2 et une bague éclairante 7 qui est allumée par le commutateur d'éclairage et de signalisation du véhicule.

Le corps de la bague éclairante 7 est munie sur sa face avant d'une collerette 8 éclairante entourant l'orifice de réception du corps d'allumage 1 muni d'un élément d'accrochage bimétallique (non référencé).

Cette bague 7 sert à la fixation de l'allume-cigares à une paroi fixe P du véhicule tel que la planche de bord ou une console de celui-ci.

Le corps d'allumage 1 est monté à l'intérieur de la bague 7.

Le bouchon 2 est logé dans le corps 1 et comporte un capuchon de préhension 9, qui entoure un corps annulaire 10 à face frontale 14 accessible.

Ce corps 10 appartient à une partie mobile 17,21 à l'encontre d'un ressort 20 s'appuyant sur un guide fixe 21 solidaire d'une bague 11 dotée d'orifices 12.

L'extrémité arrière 6, en forme de doigt, de la bague 7 est logée en regard d'une fenêtre 5 appartenant à une boîte 3 opaque portée par ledit doigt 6.

Cette boîte 3 comporte une source d'éclairage ici une ampoule électrique 4 d'éclairage. Ici la bague 11 est opaque et les orifices 12 laissent passer la lumière, la collerette 8 étant éclairée lorsque l'ampoule 4 est allumée. Le corps 10 est en matière transmettant la lumière en sorte que les rayons lumineux R provenant des orifices 12 frappent la face postérieure 13 du corps 10 et sont réfractés vers la face frontale 14.

Lorsque l'on enfonce le corps 10, la coupelle d'extrémité (non référencée), logeant une résistance chauffante, vient en prise avec l'élément d'accrochage bimétallique pour établir un circuit électrique et chauffer la résistance chauffante.

En variante le capuchon 9 peut être supprimé et la collerette 8 peut être apparente.

Quoiqu'il en soi la zone arrière de la bague éclairante fait guide de lumière et de la lumière est émise de façon intempestive vers l'arrière du corps d'allumage.

Cette lumière peut être réfléchie par une partie quelconque de la planche de bord ou du plancher du véhicule et émettre des rayons lumineux indésirables.

La présente invention a pour objet de pallier de manière simple et économique cet inconvénient.

Suivant l'invention une bague éclairante du type susindiqué est caractérisée en ce que la face arrière de la bague éclairante est recouverte d'un masque opaque.

Grâce à cette disposition on évite l'émission de rayons lumineux indésirables et ce de manière simple et économique.

En outre on obtient une luminosité plus uniforme au niveau de la collerette d'extrémité de la bague éclairante visible par l'occupant du véhicule. L'orifice d'introduction du bouchon est ainsi parfaitement visible.

Le masque peut être réalisé à l'aide d'un film déposé à chaud sur la face arrière de la bague éclairante. En variante il peut s'agir d'une peinture déposée sur la face arrière de la bague éclairante ou d'une matière opaque formant la face arrière proprement dite.

La description qui va suivre illustre l'invention en regard des dessins annexés dans lesquels :
- la figure 1 est une vue en coupe axiale d'un allumecigares selon le document FR-A-2 630 057 ;
- la figure 2 est une vue de la bague éclairante selon l'invention.

Par simplicité les éléments communs à l'art antérieur et à la présente invention seront affectés des mêmes signes de référence.

Ainsi à la figure 2 on voit en 7 la bague éclairante fixée sur la paroi fixe P du véhicule, en étant enfilée dans l'ouverture 32 de ladite paroi P par exemple le tableau de bord de véhicule ou une console de celui-ci.

En variante il peut s'agir du plancher du véhicule.

Cette bague 7 est en matériau translucide voire transparent en étant avantageusement en matière synthétique. Elle peut être par exemple à base de polycarbonate cristal ou en autre matière.

Cette bague 7 présente une collerette frontale 8 apparente en appui sur la paroi fixe P. Ici la bague est bicolore, sa collerette 8 étant en une matière différente du corps de la bague 7. Ceci peut être réalisé par surmoulage.

La collerette 8 est choisie en une matière colorée translucide permettant une bonne homogénéisation de la lumière au niveau de la face apparente de la bague éclairante. Bien entendu la bague 7 peut être en une seule matière.

Cette bague présente une extrémité arrière 6 en forme de talon présentant des glissières pour le montage à la manière d'un tiroir d'une boîte de lumière contenant une ampoule électrique, ladite boîte étant opaque et munie d'une fenêtre tournée vers l'intérieur de la bague de manière analogue à la disposition décrite à la figure 1. La face arrière 31 de cette bague est inclinée.

L'alésage interne de la bague 7 sert à la réception du corps d'allumage de la figure 1.

Ainsi qu'on l'aura compris de la lumière peut être émise à partir de la face arrière 31 de cette bague et ce en direction opposée à la paroi fixe P du véhicule.

Cette lumière peut être réfléchie par une partie quelconque par exemple de la planche de bord ou du plancher du véhicule et émettre des rayons lumineux indésirables.

Pour pallier cet inconvénient l'invention propose à cet effet de recouvrir la face arrière 31 par un masque opaque 30. Ici ce masque 30 affecte la face arrière 31 ainsi que la face arrière de l'extrémité 6 en forme de doigts servant de support à la boîte contenant l'ampoule électrique ou une autre source d'éclairage.

Ce masque peut consister en une peinture opaque déposée sur la face arrière 31 de la bague 7 et la face arrière de l'extrémité 6. Le dépôt peut être disposé par exemple par impression à chaud, tampographie ou sérigraphie. En variante il peut s'agir d'un film opaque déposé à chaud sur la face arrière 31 de la bague 7. En variante la bague 7 peut être en plusieurs matières et comporter, au niveau de sa face arrière 31, une zone en une matière opaque formant la face arrière proprement dite. En variante il peut s'agir d'un film opaque moulé sur la face arrière 31.

Grâce à l'invention, on évite l'émission intempestive de lumière en direction opposée à la paroi fixe P du véhicule et on homogénéise la collerette 8 de la bague 7 grâce à la minimisation des déperditions de lumière obtenue grâce à l'invention.

En outre on améliore la sécurité de conduite du véhicule.

Bien entendu l'extrémité arrière 6 peut être décalée axialement par rapport à la face arrière 31.

Ainsi la face arrière de l'extrémité 6 peut ne pas être dans le prolongement de la face arrière 31.

D'une manière générale la face arrière est éclairée par la source d'éclairage soit directement comme à la figure 1 ou indirectement.

## Revendications

1. Bague éclairante pour allume-cigares, en particulier pour véhicule automobile, comportant une face avant en forme de collerette (8), une extrémité arrière (6) éclairée par une source d'éclairage (4) et une face arrière (31), caractérisée en ce que la face arrière (31) de la bague éclairante (31) est pourvue d'un masque opaque (30).

2. Bague éclairante selon la revendication 1, caractérisée en ce que le masque opaque (30) affecte ladite face arrière (31) ainsi que la face arrière de l'extrémité arrière (6) de la bague éclairante (7).

3. Bague éclairante selon la revendication 1, caractérisée en ce que ledit masque (30) consiste en une peinture opaque déposée sur la face arrière (31) de la bague (7).

4. Bague éclairante selon la revendication 1, caractérisée en ce que le masque opaque consiste en un film opaque disposé à chaud sur la face arrière (31) de ladite bague (7).

5. Bague éclairante selon la revendication 1, caractérisée en ce que la face arrière (31) est formée à la faveur d'une zone en matière opaque.

6. Bague éclairante selon la revendication 1, caractérisée en ce que le masque opaque (30) consiste en un film opaque moulé sur la face arrière (31) de la bague éclairante (7).

## Claims

1. An illuminating sleeve for a cigar lighter, in particular for a motor vehicle, including a front face in the form of a collar portion (8), a rear end portion (6) illuminated by a light source (4), and rear face (31), characterised in that the rear face (31) of the illuminating sleeve (7) is provided with an opaque mask (30).

2. An illuminating sleeve according to Claim 1, characterised in that the opaque mask (30) is disposed on the said rear face (31) and also on the rear face of the rear end portion (6) of the illuminating sleeve (7).

3. An illuminating sleeve according to Claim 1, characterised in that the said mask (30) consists of an opaque paint deposited on the rear face (31) of the sleeve (7).

4. An illuminating sleeve according to Claim 1, characterised in that the opaque mask consists of an opaque film deposited hot on the rear face (31) of the said sleeve (7).

5. An illuminating sleeve according to Claim 1, characterised in that the rear face (31) is formed in a zone of opaque material.

6. An illuminating sleeve according to Claim 1, characterised in that the opaque mask (30) consists of an opaque film which is moulded on the rear face (31) of the illuminating sleeve (7).

## Patentansprüche

1. Leuchtring für Zigarettenanzünder, insbesondere für Kraftfahrzeuge, umfassend eine Vorderseite in Form eines Kragens (8), ein durch eine Beleuchtungsquelle (4) beleuchtetes hinteres Ende (6) und eine Rückseite (31), **dadurch gekennzeichnet,** daß die Rückseite (31) des Leuchtrings (31) mit einer lichtundurchlässigen Abdeckung (30) versehen ist.

2. Leuchtring nach Anspruch 1, **dadurch gekennzeichnet,** daß die lichtundurchlässige Abdeckung (30) die besagte Rückseite (31) sowie die Rückseite des hinteren Endes (6) des Leuchtrings (7) bedeckt.

3. Leuchtring nach Anspruch 1, **dadurch gekennzeichnet,** daß die besagte Abdeckung (30) aus einer auf der Rückseite (31) des Leuchtrings (7) aufgetragenen lichtundurchlässigen Farbe besteht.

4. Leuchtring nach Anspruch 1, **dadurch gekennzeichnet,** daß die lichtundurchlässige Abdeckung aus einer auf der Rückseite (31) des besagten Leuchtrings (7) warm aufgebrachten lichtundurchlässigen Folie besteht.

5. Leuchtring nach Anspruch 1, **dadurch gekennzeichnet,** daß die Rückseite (31) mittels eines Bereichs aus lichtundurchlässigem Material gebildet ist.

6. Leuchtring nach Anspruch 1, **dadurch gekennzeichnet,** daß die lichtundurchlässige Abdeckung (30) aus einer auf der Rückseite (31) des Leuchtrings (7) aufgeformten lichtundurchlässigen Folie besteht.
